(19) Europäisches Patentamt / European Patent Office / Office européen des brevets

(11) **EP 4 570 409 A1**

(12) **EUROPEAN PATENT APPLICATION**
published in accordance with Art. 153(4) EPC

(43) Date of publication:
**18.06.2025 Bulletin 2025/25**

(21) Application number: **23885379.0**

(22) Date of filing: **11.09.2023**

(51) International Patent Classification (IPC):
**B23K 9/073** $^{(2006.01)}$   **B23K 9/09** $^{(2006.01)}$
**B23K 9/095** $^{(2006.01)}$   **B23K 9/16** $^{(2006.01)}$

(52) Cooperative Patent Classification (CPC):
**B23K 9/073; B23K 9/09; B23K 9/095; B23K 9/16**

(86) International application number:
**PCT/JP2023/033084**

(87) International publication number:
**WO 2024/095613 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 JP 2022174338**

(71) Applicant: **JFE Steel Corporation
Tokyo 100-0011 (JP)**

(72) Inventors:
• **KONISHI Kyohei
Tokyo 100-0011 (JP)**
• **SAWANISHI Chikaumi
Tokyo 100-0011 (JP)**
• **TANIGUCHI Koichi
Tokyo 100-0011 (JP)**

(74) Representative: **Haseltine Lake Kempner LLP
Bürkleinstrasse 10
80538 München (DE)**

(54) **GAS-SHIELDED ARC WELDING METHOD AND METHOD FOR WELDED-JOINT PRODUCTION**

(57)    An object is to provide a gas-shielded arc welding method and a method for manufacturing a welded joint that can prevent the intrusion of oxygen into a weld metal without using a special device and can suppress the formation of slag, and that can stably produce welded joints with a good bead shape.

A gas-shielded arc welding method is a pulse welding in which a pulse peak current (Ip) and a pulse base current (Ib) are periodically repeated. In the gas-shielded arc welding method, the welding speed (V) and the short-circuit frequency (F) satisfy a specific expression, and a gas containing 98 vol% or more Ar is used as a shielding gas.

FIG. 4

EP 4 570 409 A1

## Description

Technical Field

The present invention relates to a gas-shielded arc welding method for producing a stable welded joint form while suppressing slag formation, and to a method for manufacturing a welded joint.

Background Art

In recent years, there has been a growing need for automobiles to use stronger and more rigid members in car body and structures in order to enhance the safety and reliability of the car body and structures and at the same time to use lightweight members in order to improve fuel efficiency. As a result, efforts are being made to reduce the thickness of steel sheets for such members by the use of high-strength steel sheets. Among the various members used in automobiles, in particular, suspension members (such as, for example, lower arms) are made of thick steel sheets compared to bodies from the points of view of the strength and rigidity of the members. Thus, further reduction in the weight of car body and structures will be achieved if the thickness of steel sheets used in suspension members can be further reduced by increasing the strength of the steel sheets. This will realize improved fuel efficiency while ensuring the strength and rigidity of members.

In general, members that will be used in corrosive environments are subjected to antirust treatments, such as chemical conversion treatment and electrodeposition coating, after being welded in order to ensure corrosion resistance. Unfortunately, it is often the case that the welds and the vicinities thereof are rusted or corroded over time. The corrosion that occurs in the electrodeposition-coated member tends to start at the weld. Over time, the corrosion spreads widely on the weld and its surroundings while causing blisters on the coating film, and also progresses in the thickness direction. The progress of corrosion reduces the thickness at the weld and the vicinity thereof, and consequently lowers the strength of the weld and ultimately weakens the strength of the member. That is, the occurrence and progress of corrosion in a member where a load acts on a weld (such as, for example, automobile suspension members) can lead to the destruction of the member.

Electrodeposition coating is preceded by a pretreatment for improving the adhesion between a base steel sheet including a weld metal, and an electrodeposition coating film. Specifically, electrodeposition coating is performed after a chemical conversion treatment (such as, for example, zinc phosphate treatment) is applied to the base steel sheet and the weld metal. The zinc phosphate treatment, which is a common example of the chemical conversion treatments, is a technique in which zinc phosphate crystals are grown on the surface of a base steel sheet and a weld metal to increase the adhesion of a coating film formed by electrodeposition coating. Unfortunately, even members that have been chemically converted by the conventional technique prior to electrodeposition coating frequently develop blisters on the coating film with time over a wide area on the weld and its surroundings. That is, it is difficult for the conventional chemical conversion pretreatment followed by electrodeposition coating to completely suppress the occurrence of corrosion from the weld.

When members made of steel sheets with coating layer are arc welded, the welds are subjected to high temperature by the arc plasma (hereinafter, "arc") that is the heat source, and the coating layers are vaporized to expose uncoated portions locally. As a result, a significant enhancement in corrosion resistance that will justify the use of expensive precoated steel sheets cannot be expected.

As described above, various manufacturing techniques have been developed so as to improve the corrosion resistance of members, but each has its own advantages and disadvantages. To enhance corrosion resistance while avoiding the increase in manufacturing costs, techniques have been studied that can prevent more effectively the occurrence and progress of corrosion from a weld.

It is conventionally known that corrosion of a weld starts from:

(a) slag attached to the weld (mainly the surface of the weld bead),
(b) welding fumes attached to the weld, and
(c) oxides formed on the surface of the steel sheets exposed to high temperatures by welding. In the presence of the deposits (a) and/or (b) or of the oxides (c) on the weld, chemical conversion treatment locally fails to coat the member with a chemical conversion layer of zinc phosphate crystals, and the deposits and/or the products remain on exposed regions. Such regions do not allow an electrodeposition coating film to be formed sufficiently, and the adhesion of the coating film is insufficient to cause a significant decrease in corrosion resistance. As a result, corrosion occurs and progresses and the sheet loses thickness. The techniques described below address the prevention of the occurrence of deposits (a) and (b) and of oxides (c) mentioned above.

For example, Patent Literature 1 discloses a technique in which an arc weld and the vicinity thereof, before being electrodeposition coated, are sprayed with or immersed in a non-oxidizing acidic solution with a pH of 2 or less at a liquid temperature of 30 to 90°C. This technique removes slag (a), welding fumes (b), and oxides (c) by dissolving the weld bead and the steel sheet with the non-oxidizing solution.

However, the technique disclosed in Patent Literature 1 requires rinsing of the acidic solution before electrodeposition coating, and this fact makes the member manufacturing process complicated. In addition, a member fabricated into a desired shape is a result of overlapping and joining of steel sheets having various shapes and can trap a residue of the acidic solution in gaps between the overlapped steel sheets, thus undergoing severe corrosion. Furthermore, the technique involves a large amount of the acidic solution and thus the manufacturing equipment is exposed to a corrosive environment and is easily corroded or broken down. In addition, the scattering of fumes needs to be prevented in order to ensure the safety of workers.

Patent Literature 2 discloses a technique that increases the post-coating corrosion resistance of a weld and the vicinity thereof by reducing the total amount of Si in a welding wire used in arc welding and a base material, and also by increasing the total amount of Mn in the welding wire and the base material.

However, reducing the Si content in order to suppress slag formation inevitably lowers the strength of the steel sheet. That is, the technique disclosed in Patent Literature 2 needs to use thick steel sheets in order to ensure the strength of members and will not succeed in achieving weight reduction of car body and structures.

Patent Literature 3 discloses a technique that allows a chemical conversion layer to be formed sufficiently even on a weld bead that bears slag, welding fumes, and oxides, by controlling the composition of a treatment liquid used in the chemical conversion treatment. Specifically, the formation of a chemical conversion layer is facilitated by surface-treating the steel with a surface-conditioning liquid containing colloidal zinc phosphate. Furthermore, the steel is chemically converted with a zinc phosphate treatment liquid having a F content of 100 mass ppm or more. This treatment dissolves and removes slag, welding fumes, and oxides and thereby increases the adhesion of a coating film that will be formed by electrodeposition coating.

However, the zinc phosphate treatment liquid used in the technique disclosed in Patent Literature 3 contains fluorine that is designated as a toxic substance, and the fluorine content must be lowered to a level meeting environmental standards when the liquid waste is discharged outside the factory. Thus, a large-scale liquid waste disposal facility is necessary in addition to the member manufacturing facility.

Citation List

Patent Literature

PTL 1: Japanese Unexamined Patent Application Publication No. 9-20994
PTL 2: Japanese Unexamined Patent Application Publication No. 8-33997
PTL 3: Japanese Patent No. 5549615

Summary of Invention

Technical Problem

The present invention has been made in view of the problems discussed above. It is therefore an object of the present invention to provide a gas-shielded arc welding method and a method for manufacturing a welded joint that can prevent the intrusion of oxygen into a weld metal without using a special device and can suppress the formation of slag, and that can stably produce welded joints with a good bead shape.

Solution to Problem

The present inventors have found that the most effective way to enhance the corrosion resistance of welds and to stably obtain welded joints with a good bead shape is to reduce the amount of slag that is attached to the welds and to realize periodic short-circuit transfer using pulse welding.

In order to reduce the amount of slag formed in a weld, it is important to suppress the oxidation of Si, Mn, Ti, etc. contained in the steel sheets and the welding wire. The oxidation of these elements is suppressed and the amount of slag formation can be reduced by the use of a shielding gas containing a reduced amount of an oxidizing gas. When, however, gas-shielded arc welding is performed at a welding speed of 180 cm/min in a shielding gas containing a high proportion of Ar gas, the cathode spot crawls around on the steel sheet surface, thus making the arc unstable. As a result, another problem occurs in which oxygen stemming from air entrainment is mixed into the molten pool or the weld bead shape is deteriorated. The present inventors have worked on these new problems and have conceived that pulse welding will reduce the crawling of the cathode spot and will realize periodic short-circuit transfer that is less susceptible to arc fluctuations. Furthermore, the present inventors have concluded that a stable welded joint form can be obtained by limiting a relationship between the short-circuit frequency in a pulse current waveform and the welding speed. Specifically, the technique of the present invention is based on the finding that the short-circuit frequency in short-circuit transfers induced by a pulse current is closely related to the amount of deposits for forming a weld bead and to the convection in the molten pool, and welded joints having a good bead shape can be obtained stably when the above factor satisfies a specific relational expression with the welding speed (V) that varies depending on the welding speed.

The present invention is completed based on the above findings. A gist of the present invention is as follows.

[1] A gas-shielded arc welding method of forming a joint by short-circuiting a base material and a welding wire supplied with power from a contact tip in a welding torch, wherein the gas-shielded arc welding method performs pulse welding in which a pulse peak current (Ip) and a pulse base current (Ib) are periodically repeated,

a welding speed (V) is 180 cm/min or more; when the welding speed (V) is 180 cm/min or more and less than 250 cm/min, the welding speed (V) and the short-circuit frequency (F) satisfy expression (1) below,
when the welding speed (V) is 250 cm/min or more, the welding speed (V) and the short-circuit frequency (F) satisfy expression (2) below, and
a gas containing 98 vol% or more Ar is used as a shielding gas,

$$60 \leq F - 0.2V \leq 110 \quad \cdots (1)$$

$$30 \leq F - 0.3V \leq 80 \quad \cdots (2)$$

wherein in expressions (1) and (2), V (cm/min) is the welding speed and F (Hz) is the short-circuit frequency.

[2] The gas-shielded arc welding method according to [1], wherein in the pulse welding, the pulse peak current (Ip) is 300 A or more and 600 A or less, and the pulse base current (Ib) is 30 A or more and 120 A or less.

[3] A method for manufacturing a welded joint using the gas-shielded arc welding method described in [1] or [2].

Advantageous Effects of Invention

According to the present invention, welded joints with a good bead shape can be obtained stably under high-speed welding conditions. Moreover, the intrusion of oxygen into the weld metal and the formation of slag can be suppressed without making special changes to the conventional welding device used in carbon dioxide gas welding, MAG welding with an inert gas-active gas mixture, or MIG welding with an inert gas-based gas.

Brief Description of Drawings

[Fig. 1] Fig. 1 is a schematic view illustrating an exemplary welded joint produced by arc welding.
[Fig. 2] Fig. 2(a) and Fig. 2(b) are schematic views illustrating droplet transfer in conventional arc welding.
[Fig. 3] Fig. 3(a) and Fig. 3(b) are schematic views illustrating short-circuit transfer according to the present invention.
[Fig. 4] Fig. 4 is a schematic diagram illustrating a pulse current waveform in arc welding according to the present invention.
[Fig. 5] Fig. 5 is a schematic view illustrating the bead area and the slag-covered area of a weld bead.
[Fig. 6] Fig. 6 is a schematic view illustrating the minimum value and the maximum value of bead width.

Description of Embodiments

The present invention will be described in detail hereinbelow with reference to the drawings.

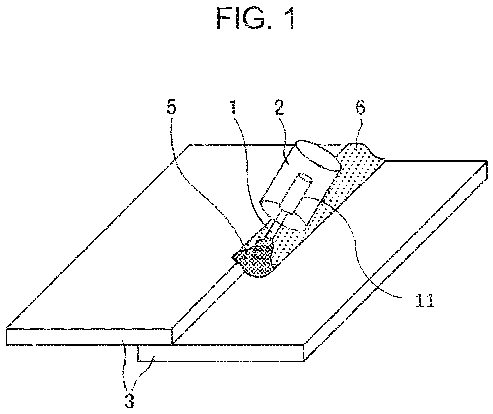

Fig. 1 is a schematic view illustrating an exemplary welded joint produced by arc welding according to an embodiment of the present invention. While the figure illustrates fillet welding of a lap joint as a typical example, the welded joint form and the welding attitude in the present invention are not limited.
In the present invention, for example, as illustrated in Fig. 1, a welding wire 1 is continuously fed from a welding torch 2 to a base material 3 (specifically, a weld seam defined by the corner of a step formed by lapping of, for example, two sheets of the base material 3) through a central portion of the welding torch 2. The welding wire 1 is used as the anode, and the base material 3 is used as the cathode. A welding voltage is applied from a welding power supply (not shown). A contact tip 11 is attached inside the welding torch 2. The contact tip 11 serves to supply power to the welding wire 1 and guide the wire feed. Part of an Ar shielding gas (not shown) supplied from the inside of the welding torch 2 is ionized into plasma, thereby forming an arc 5 between the welding wire 1 and the base material 3. Part of the Ar shielding gas that is not ionized and flows from the welding torch 2 to the base material 3 plays a role of shielding the arc 5 and a molten pool (not shown in Fig. 1) formed by melting of the base material 3 from the outside air. The heat input from the arc 5 melts the tip of the welding wire 1 to form a droplet, and the droplet is transported to the molten pool by, for example, electromagnetic force or gravity. This phenomenon occurs continuously while the welding torch 2 or the base material 3 is moved. As a result, the molten pool behind the process along the weld seam solidifies to form a weld bead 6. In this manner, at least two steel sheets are joined together.

Extreme welding instability is encountered when carbon steel of interest in the present invention is welded by conventional MIG welding. MAG welding or MIG welding is a reversed polarity welding in which an electrode (a wire) is the anode. On the surface of a steel sheet as a base material, cathode spots are formed from regions, such as oxides, that have a low work function and easily emit electrons. For example, an aluminum alloy having a strong oxide film on the surface of the base material can be favorably welded because cathode spots are formed stably from the oxide film on the weld seam. However, steel rarely has an oxide film and therefore cathode spots are not fixed in MIG welding that does not generate oxides derived from $O_2$ or $CO_2$. Thus, the cathode spots move around on the surface of the base material vigorously in search of places where the work function is low. The welding is destabilized and the welded joint that is obtained has a meandering or wavy weld bead.

To address this phenomenon, the present inventors have observed the arc behavior in welding experiments and have concluded that the meandering or wavy shape of the weld bead encountered in MIG welding of carbon steel is mainly attributed to unstable droplet transfer.

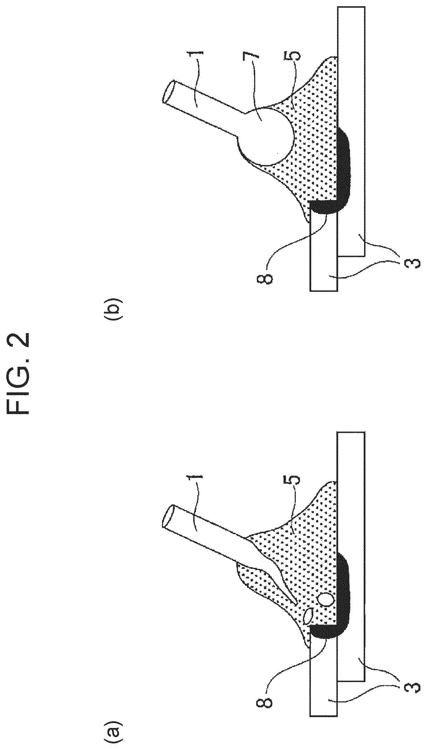

Fig. 2(a) and Fig. 2(b) are schematic views illustrating droplet transfer in conventional MIG welding. In conventional MIG welding, droplets transfer in mixed manners in which, as illustrated in Fig. 2(a), the welding wire 1 is melted and droplets are continuously transported from the long and thin liquid column to the molten pool 8. Such unstable droplet transfer will be effectively avoided by causing droplets 7 to be detached regularly from the tip of the welding wire 1. However, the electromagnetic pinching force acting on the welding wire 1 in Ar shielding gas is small, which makes the detachment of the droplets 7 difficult.

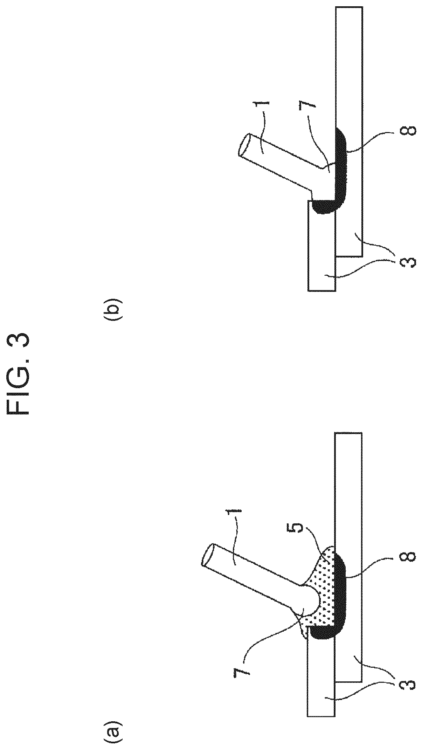

The present invention is based on the finding that droplet transfer is effectively stabilized by completing the joining by so-called periodic short-circuit transfer in which the non-short-circuited state of Fig. 3(a) and the short-circuited state of Fig. 3(b) are regularly repeated between the tip of the welding wire 1 and the base material 3, and a droplet 7 is allowed to be transferred to the base material 3 during the short-circuited state. Furthermore, the present inventors carried out further welding experiments and have found that it is necessary to specify the short-circuit frequency in order to obtain a stable welded joint form, and the short-circuit frequency that should be targeted changes depending on the welding speed.

Gas containing 98 vol% or more Ar

The amount of slag attached to the weld needs to be reduced in order to enhance the corrosion resistance of the weld. For this purpose, it is important to suppress the oxidation of Si, Mn, Ti, etc. contained in the steel sheets and the welding wire 1. In view of this, the shielding gas that is used needs to be a gas containing 98 vol% or more Ar. Argon is preferably contained 99 vol% or more. The upper limit is not particularly limited, and argon may represent 100 vol%.

The average frequency of short-circuit transfers (the short-circuit frequency) F (Hz) that affects the volume of the droplet 7 at the tip of the wire is not particularly limited but is preferably 20 Hz or more, more preferably 30 Hz or more, and still more preferably 40 Hz or more. The upper limit of the average frequency of short-circuit transfers (the short-circuit frequency) F (Hz) is preferably 200 Hz or less, more preferably 180 Hz or less, and still more preferably 150 Hz or less. Specifically, the short-circuit frequency indicates the number of occurrences per unit time of a phenomenon (a short-circuit phenomenon) in which the droplet 7 at the tip of the wire comes into contact with the molten pool 8 and the arc 5 is extinguished. For example, the average frequency of short-circuit transfers (the short-circuit frequency) F (Hz) can be measured by monitoring the arc voltage during welding with an oscilloscope to count the number of times the arc voltage becomes zero, and dividing the count by the monitoring time to calculate the number of counts per second. If the monitoring time is too short, the difference in count will be large. Thus, the monitoring time is preferably 0.5 s or more, more preferably 0.8 s or more, and still more preferably 1.0 s or more. On the other hand, the upper limit is not particularly limited but is preferably 3.0 s or less because the count processing time is extended with increasing volume of measurement data and thus workability is lowered. For example, one of the reasons for the above is that when the short-circuit frequency is measured in-process and the welding conditions are feedback controlled, an excessively long monitoring time makes it difficult to perform instantaneous feedback control depending on the welding situation.

The welding speed (V) is 180 cm/min or more.

In a gas-shielded arc welding method, increasing the proportion of Ar is effective in reducing the amount of slag that occurs and is attached to the weld. In this case, however, the cathode spot crawls around and the droplet transfer is unstable, thus destabilizing the welding. In particular, the above phenomenon is noticeable in the case of high-speed welding at a welding speed (V) of 180 cm/min or more. In this case, it may be difficult to obtain a desired weld bead shape and a desired penetration shape, or the welding is accompanied by disturbance of the arc that causes air entrainment, and may result in slag formation. Thus, welding at a welding speed (V) of 180 cm/min or more effectively benefits from limiting the conditions as described below, and the welding speed (V) of interest in the present invention is limited to 180 cm/min or more.

The welding speed (V) and the short-circuit frequency (F) satisfy expressions (1) and (2) specified below:

$$60 \leq F - 0.2V \leq 110 \quad \text{(when the welding speed V is 180 cm/min or more and less than 250 cm/min)} \qquad (1)$$

$$30 \leq F - 0.3V \leq 80 \quad \text{(when the welding speed V is 250 cm/min or more)} \qquad (2)$$

In expressions (1) and (2), V (cm/min) is the welding speed and F (Hz) is the short-circuit frequency.

In a gas-shielded arc welding method in which the proportion of Ar is high, a welded joint having a good bead shape can be effectively obtained by periodically pushing down a droplet 7 formed at the tip of a welding wire 1 into a molten pool 8 so as to establish a short-circuit. In order to obtain a stable welded joint form, it is necessary to specify the short-circuit frequency. The present invention has found that the range of short-circuit frequency varies depending on the welding speed, and limits the short-circuit frequency and the welding speed as follows. Specifically, the short-circuit frequency and the welding speed should satisfy expression (1) when the welding speed V is 180 cm/min or more and less than 250 cm/min, and should satisfy expression (2) when the welding speed V is 250 cm/min or more. In this manner, the movement of the droplets 7 is stabilized and further the amount of deposits can be equalized, and an appropriate weld bead shape can be obtained stably. If (F - 0.2V) or (F - 0.3V) is excessively small, the droplets 7 that move to the molten pool 8 may be increased in size or droplet-transferring modes other than short-circuit transfer (such as, for example, streaming transfer) may occur irregularly. Thus, (F - 0.2V) for the case where the welding speed V is 180 cm/min or more and less than 250 cm/min is limited to 60 or more. (F - 0.2V) is preferably 65 or more, and more preferably 70 or more. (F - 0.3V) for the case where the welding speed V is 250 cm/min or more is limited to 30 or more. (F - 0.3V) is preferably 35 or more, and more preferably 40 or more. If, on the other hand, (F - 0.2V) or (F - 0.3V) is excessively large, pulsing produces small droplets 7 but excessively increases the number of re-ignition of the arc 5 after short-circuiting, thus destabilizing the arc 5. Thus, (F - 0.2V) for the case where the welding speed V is 180 cm/min or more and less than 250 cm/min is limited to 110 or less. (F - 0.2V) is preferably 105 or less, and more preferably 100 or less. (F - 0.3V) for the case where the welding speed V is 250 cm/min or more is limited to 80 or less. (F - 0.3V) is preferably 75 or less, and more preferably 70 or less.

The arc 5 is more prone to destabilization when the welding speed V is 250 cm/min or more. Under such high-speed conditions, it is effective to increase the short-circuit frequency F by a greater degree relative to the welding speed V. At an excessively high welding speed V, the molten metal is small in amount, and is swept away to the rear of the molten pool 8 by the arc pressure and solidifies before returning to the front of the molten pool 8, thus sometimes causing welding defects, such as undercuts and humping beads. Thus, the upper limit of the welding speed V is preferably 300 cm/min or less. The welding speed V is preferably 280 cm/min or less, and more preferably 270 cm/min or less.

The pulse peak current (Ip) is 300 A or more and 600 A or less (preferred condition).

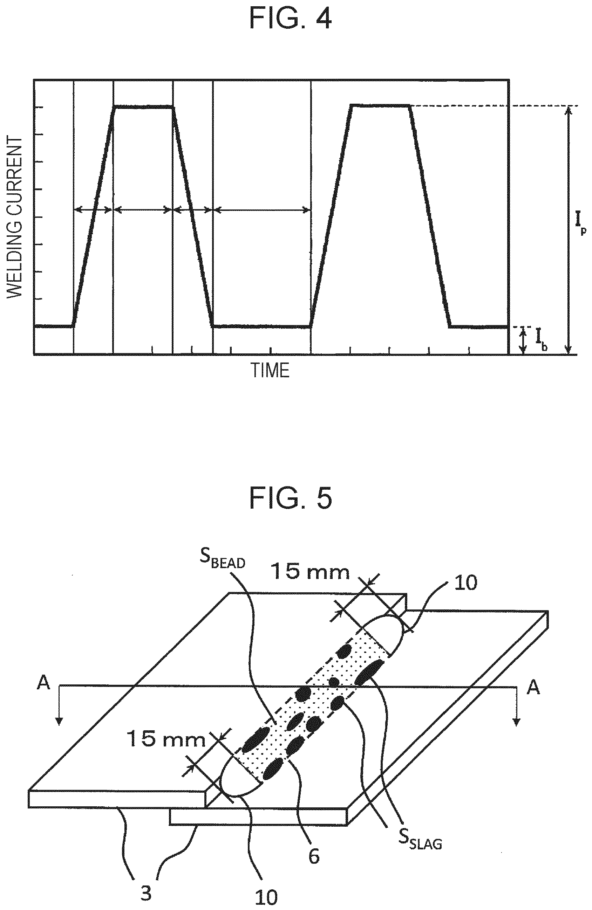

Fig. 4 illustrates a schematic diagram of a pulse current waveform in the arc welding of the present invention. Pulse welding is a method of welding in which a pulse peak current (Ip) and a pulse base current (Ib) are periodically repeated. If the pulse peak current (Ip) is excessively low, an action that pushes down the droplet 7 formed at the tip of the welding wire 1 to the molten pool 8 cannot be obtained and short-circuiting may become unstable. Furthermore, sufficient heat input cannot be ensured and the bead shape may be deteriorated. Thus, the pulse peak current (Ip) is preferably 300 A or more. The pulse peak current (Ip) is preferably 350 A or more, more preferably 380 A or more, and still more preferably 400 A or more. On the other hand, an excessively high pulse peak current causes burn-through. Furthermore, an excessively high pulse peak current causes a failure of shielding that leads to an increased amount of slag formation, or increases the amount of spatters. Thus, the pulse peak current (Ip) is preferably 600 A or less, preferably 590 A or less, more preferably 580 A or less, and still more preferably 570 A or less.

The pulse base current (Ib) is 30 A or more and 120 A or less (preferred condition).

If the pulse base current (Ib) is too low, the arc discharge during the pulse base period is destabilized to cause destabilization of short-circuiting or deterioration of the bead shape, and also the weld penetration may be incomplete. Thus, the pulse base current (Ib) is preferably 30 A or more. The pulse base current (Ib) is more preferably 35 A or more. The pulse base current (Ib) is still more preferably 40 A or more. The pulse base current (Ib) is most preferably 45 A or more. If, on the other hand, the pulse base current is excessively high, burn-through occurs and a sufficient difference between the pulse peak current (Ip) and the pulse base current (Ib) cannot be ensured, with the result that a short-circuiting action that pushes down the droplet 7 formed at the tip of the welding wire 1 to the molten pool 8 cannot be obtained sufficiently and welding may become unstable. Thus, the pulse base current (Ib) is preferably 120 A or less. The pulse base current (Ib) is more preferably 110 A or less. The pulse base current (Ib) is still more preferably 100 A or less. The pulse base current (Ib) is most preferably 90 A or less.

For example, preferred welding conditions are such that the welding current is 150 A to 300 A, the arc voltage is 20 V to 35 V, the distance between the base material and the contact tip is 5 mm to 30 mm, and the Ar shielding gas flow rate is 10 L/min to 25 L/min. Specifically, the welding current is preferably 150 A or more, more preferably 170 A or more, and still more preferably 180 A or more. The welding current is preferably 300 A or less, more preferably 280 A or less, and still more preferably 270 A or less. The arc voltage is preferably 20 V or more, more preferably 21 V or more, and still more preferably 22 V or more. The arc voltage is preferably 35 V or less, more preferably 32 V or less, and still more preferably 30 V or less. The distance between the base material 3 and the contact tip 11 is preferably 5 mm or more, more preferably 8 mm or more, and still more preferably 10 mm or more. The distance between the base material 3 and the contact tip 11 is preferably 30 mm or less, more preferably 25 mm or less, and still more preferably 20 mm or less. The Ar shielding gas flow rate is preferably 10 L/min or more, more preferably 12 L/min or more, and still more preferably 15 L/min or more. The Ar shielding gas flow rate is preferably 25 L/min or less, more preferably 24 L/min or less, and still more preferably 22 L/min or less. The welding current and the arc voltage are the averages in each welding pass. More specifically, the welding current is the average of the pulse peak current and the pulse base current. Control of this makes it possible to grasp the total heat input during welding.

The welding wire 1 used in the present invention is not particularly limited. For example, solid wires, such as YGW12 and YGW16 described in JIS Z 3312, may be used.

The base materials 3 of interest in the present invention are steel sheets and coated steel sheets. The chemical composition of the steel sheets is not limited. For example, the steel sheets preferably contain C: 0.02 mass% to 0.3 mass%, Si: 0.01 mass% or more, Mn: 0.5% mass% or more, P: 0.05 mass% or less, and S: 0.05 mass% or less, and may further contain alloying elements, such as Cu, Ni, Cr, and Ti. In the above steel sheets, the Si content is preferably 3.0 mass% or less, and the Mn content is preferably 5.0 mass% or less. The lower limit of P is not particularly limited, but is preferably 0.0005 mass% or more. The lower limit of S is not particularly limited, but is preferably 0.0005 mass% or more. The coating composition in the coated steel sheets is not particularly limited. For example, the coating may be Zn.

The above limitations enable the manufacturing of a welded joint with a good bead shape while suppressing the formation of slag in the weld, making it possible to obtain such a welded joint. The amount of slag formation was evaluated by the method described in Examples. Furthermore, a new technical idea in the control of bead shape according to the present invention resides in the finding that the satisfaction of the specific relationship between the short-circuit frequency (F) and the welding speed is highly effective in the control of bead shape.

In addition to the above, the present invention is also advantageously characterized by its high robustness. High robustness means that the inventive technique is less susceptible to disturbances, such as environment and sheet shape, and has a wide range of appropriate welding conditions.

EXAMPLES

Hereinbelow, Examples of the present invention will be described. Two steel sheets (both 2.6 mm thick) having a chemical composition described in Table 1 were lapped and were fillet welded by an exemplary method illustrated in Fig. 1. In addition to the components described in Table 1, the steel sheets contained Fe and alloying elements, such as Cu, Ni, Cr, and Ti. The welding was performed under the welding conditions described in Table 2. YGW16 specified in JIS Z 3312 was used as the welding wire 1.

The welded steel sheets obtained as described above were tested by the following methods to evaluate the slab-covered area ratio and the bead width ratio.

(Slag-covered area ratio)

Fig. 5 is a schematic view illustrating the bead area and the slag-covered area of a weld bead. The surface of the weld bead 6 excluding the bead-start and bead-finish end portions 10 (each 15 mm long) is photographed from directly above, and the projected areas from above of the weld bead 6 and the slag are measured to calculate the bead surface area $S_{BEAD}$ and the slag-covered surface area $S_{SLAG}$ illustrated in Fig. 5. When the length of the weld bead 6 is less than 130 mm, the surface over the entire length excluding the bead-start and bead-finish end portions 10 is photographed. When the length of the weld bead 6 is 130 mm or more, the surface of a randomly selected region (100 mm in length) excluding the bead-start and bead-finish end portions 10 is photographed. The value of the slag surface area $S_{SLAG}$ was divided by the value of the bead surface area $S_{BEAD}$ to give the slag-covered area ratio $S_{RATIO}$. $S_{RATIO}$ of 30% or less was acceptable.

(Bead width ratio)

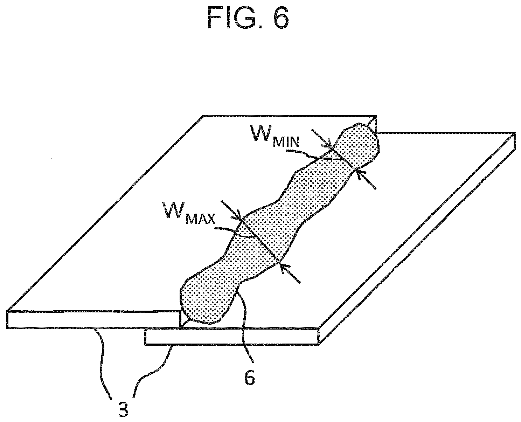

Fig. 6 is a schematic view illustrating the minimum value and the maximum value of bead width. The maximum value $W_{MAX}$ and the minimum value $W_{MIN}$ of the width of a bead similar to that illustrated in Fig. 6 were determined as follows. The surface of the weld bead 6 excluding the bead-start and bead-finish end portions 10 (each 15 mm long) was photographed, and the photograph was analyzed. When the length of the weld bead 6 was less than 130 mm, the surface over the entire length excluding the bead-start and bead-finish end portions 10 was photographed. When the length of the weld bead 6 was 130 mm or more, the surface of a randomly selected region (100 mm in length) excluding the bead-start and bead-finish end portions 10 was photographed. The bead widths were calculated, and the minimum value $W_{min}$ was divided by the maximum value $W_{max}$ to determine the bead width ratio $W_{RATIO}$. $W_{RATIO}$ of 60% or more was acceptable.

From Table 2, the welding conditions Nos. 1 to 7 representing Inventive Examples satisfied 30% or less $S_{RATIO}$ and 60% or more $W_{RATIO}$, and afforded a stable welded joint form while suppressing slag.

Of Inventive Examples, the welding conditions Nos. 1 to 5 achieved 80% or more $W_{RATIO}$, and afforded a more stable welded joint form.

In contrast, the welding conditions Nos. 8 to 12 representing Comparative Examples did not satisfy at least one of 30% or less $S_{RATIO}$ and 60% or more $W_{RATIO}$, and failed to suppress slag formation and did not afford satisfactory weld beads.

In Table 2, the steel sheets were rated as A (superior) when "$S_{RATIO}$ was 30% or less and $W_{RATIO}$ was 80% or more", as B (excellent) when "$S_{RATIO}$ was 30% or less and $W_{RATIO}$ was 60% or more and less than 80%", and as F (fail) when "$S_{RATIO}$ was more than 30% or $W_{RATIO}$ was less than 60%".

[Table 1]

| Chemical composition of steel sheets (mass%) | | | | |
|---|---|---|---|---|
| C | Si | Mn | P | S |
| 0.060 | 0.71 | 1.80 | 0.006 | 0.001 |

[Table 2]

| Welding conditions Nos. | Parameters | | | | | | | | | | Evaluation criteria | | Rating | Remarks |
|---|---|---|---|---|---|---|---|---|---|---|---|---|---|---|
| | Shielding gas | Welding current (A) | Arc voltage (V) | Pulse peak current (A) | Pulse base current (A) | Welding speed (cm/min) | Droplet transfer | Short-circuit frequency (Hz) | Exp. (1) F-0.2V | Exp. (2) F-0.3V | $S_{RATIO}$ (%) | $W_{RATIO}$ (%) | | |
| 1 | 100%Ar | 244 | 25.6 | 500 | 50 | 200 | Short-circuited | 131 | 91 | - | 3 | 82 | A | Inv. Ex. |
| 2 | 100%Ar | 226 | 24.3 | 550 | 80 | 180 | Short-circuited | 122 | 86 | - | 6 | 84 | A | Inv. Ex. |
| 3 | 98%Ar+ 2%$CO_2$ | 209 | 20.6 | 500 | 50 | 180 | Short-circuited | 103 | 67 | - | 23 | 95 | A | Inv. Ex. |
| 4 | 100%Ar | 237 | 24.2 | 600 | 80 | 260 | Short-circuited | 147 | - | 69 | 4 | 80 | A | Inv. Ex. |
| 5 | 100%Ar | 230 | 23.7 | 300 | 40 | 200 | Short-circuited | 113 | 73 | - | 3 | 82 | A | Inv. Ex. |
| 6 | 100%Ar | 221 | 25.0 | 500 | 20 | 180 | Short-circuited | 97 | 61 | - | 9 | 65 | B | Inv. Ex. |
| 7 | 100%Ar | 255 | 25.2 | 550 | 130 | 260 | Short-circuited | 109 | - | 31 | 6 | 71 | B | Inv. Ex. |
| 8 | 100%Ar | 219 | 24.6 | 280 | 50 | 260 | Short-circuited | 108 | - | 30 | 8 | 64 | B | Inv. Ex. |
| 9 | 100%Ar | 202 | 24.9 | 650 | 50 | 200 | Short-circuited | 147 | 107 | - | 21 | 73 | B | Inv. Ex. |
| 10 | 100%Ar | 238 | 21.8 | 650 | 50 | 250 | Short-circuited | 157 | - | 82 | 19 | 58 | F | Comp. Ex. |
| 11 | 100%Ar | 172 | 18.7 | 280 | 50 | 180 | Short-circuited | 93 | 57 | - | 8 | 52 | F | Comp. Ex. |
| 12 | 95%Ar+5%$CO_2$ | 208 | 21.0 | 500 | 50 | 200 | Not short-circuited | - | - | - | 33 | 87 | F | Comp. Ex. |
| 13 | 100%Ar | 240 | 27.4 | 680 | 50 | 200 | Short-circuited | 165 | 125 | - | 24 | 57 | F | Comp. Ex. |

EP 4 570 409 A1

| Welding conditions Nos. | Parameters | | | | | | | | | | Evaluation criteria | | Rating | Remarks |
| --- | --- | --- | --- | --- | --- | --- | --- | --- | --- | --- | --- | --- | --- | --- |
| | Shielding gas | Welding current (A) | Arc voltage (V) | Pulse peak current (A) | Pulse base current (A) | Welding speed (cm/min) | Droplet transfer | Short-circuit frequency (Hz) | Exp. (1) F-0.2V | Exp. (2) F-0.3V | $S_{RATIO}$ (%) | $W_{RATIO}$ (%) | | |
| 14 | 100%Ar | 208 | 23.2 | 260 | 50 | 250 | Short-circuited | 92 | - | 17 | 14 | 55 | F | Comp. Ex. |
| 15 | 100%Ar | 197 | 20.8 | - | - | 200 | Not short-circuited | - | - | - | 11 | 53 | F | Comp. Ex. |

Reference Signs List

1 WELDING WIRE
2 WELDING TORCH
3 BASE MATERIAL
5 ARC
6 WELD BEAD
7 DROPLET
8 MOLTEN POOL
10 BEAD-START AND BEAD-FINISH END PORTIONS
11 CONTACT TIP
$S_{BEAD}$ BEAD SURFACE AREA
$S_{SLAG}$ SLAG-COVERED SURFACE AREA
$W_{MAX}$ MAXIMUM VALUE OF BEAD WIDTH
$W_{min}$ MINIMUM VALUE OF BEAD WIDTH

**Claims**

1. A gas-shielded arc welding method of forming a joint by short-circuiting a base material and a welding wire supplied with power from a contact tip in a welding torch, wherein the gas-shielded arc welding method performs pulse welding in which a pulse peak current (Ip) and a pulse base current (Ib) are periodically repeated,

   a welding speed (V) is 180 cm/min or more; when the welding speed (V) is 180 cm/min or more and less than 250 cm/min,
   the welding speed (V) and a short-circuit frequency (F) satisfy expression (1) below,
   when the welding speed (V) is 250 cm/min or more, the welding speed (V) and a short-circuit frequency (F) satisfy expression (2) below, and
   a gas containing 98 vol% or more Ar is used as a shielding gas,

$$60 \leq F - 0.2V \leq 110 \quad \cdots (1)$$

$$30 \leq F - 0.3V \leq 80 \quad \cdots (2)$$

   wherein in expressions (1) and (2), V (cm/min) is the welding speed and F (Hz) is the short-circuit frequency.

2. The gas-shielded arc welding method according to claim 1, wherein in the pulse welding, the pulse peak current (Ip) is 300 A or more and 600 A or less, and the pulse base current (Ib) is 30 A or more and 120 A or less.

3. A method for manufacturing a welded joint using the gas-shielded arc welding method described in claim 1 or 2.

FIG. 1

# FIG. 2

(a)

(b)

EP 4 570 409 A1

# FIG. 3

(a)

(b)

EP 4 570 409 A1

# FIG. 4

# FIG. 5

FIG. 6

# EP 4 570 409 A1

<table>
<tr><td colspan="2" align="center">INTERNATIONAL SEARCH REPORT</td><td>International application No.<br><br>**PCT/JP2023/033084**</td></tr>
</table>

**A. CLASSIFICATION OF SUBJECT MATTER**

**B23K 9/073**(2006.01)i; **B23K 9/09**(2006.01)i; **B23K 9/095**(2006.01)i; **B23K 9/16**(2006.01)i
FI: B23K9/073 545; B23K9/09; B23K9/095 501A; B23K9/16 J

According to International Patent Classification (IPC) or to both national classification and IPC

**B. FIELDS SEARCHED**

Minimum documentation searched (classification system followed by classification symbols)

B23K9/073; B23K9/09; B23K9/095; B23K9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/051911 A1 (PANASONIC INTELLECTUAL PROPERTY MANAGEMENT CO., LTD.) 22 March 2018 (2018-03-22)<br>    entire text, all drawings | 1-3 |
| A | JP 2009-262197 A (SUMITOMO LIGHT METAL IND LTD) 12 November 2009 (2009-11-12)<br>    entire text, all drawings | 1-3 |

☐ Further documents are listed in the continuation of Box C.   ☑ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **26 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033084**

| Patent document cited in search report | | | Publication date (day/month/year) | Patent family member(s) | | | Publication date (day/month/year) |
|---|---|---|---|---|---|---|---|
| WO | 2018/051911 | A1 | 22 March 2018 | US | 2019/0224771 | A1 | |
| | | | | entire text, all drawings | | | |
| | | | | EP | 3513897 | A1 | |
| | | | | CN | 109715336 | A | |
| JP | 2009-262197 | A | 12 November 2009 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9020994 A
- JP 8033997 A

- JP 5549615 B